Europäisches Patentamt

(19) European Patent Office

Office européen des brevets

(11) Veröffentlichungsnummer: **0 131 539**
**B1**

## (12) EUROPÄISCHE PATENTSCHRIFT

| | |
|---|---|
| (45) Veröffentlichungstag der Patentschrift: **22.04.87** | (51) Int. Cl.⁴: **E 21 B 7/22**, E 02 D 13/00, F 16 F 15/08 |
| (21) Anmeldenummer: **84730050.6** | |
| (22) Anmeldetag: **16.05.84** | |

ㅤ

(54) **Schalldämpfung einer Rammschwinge.**

| | |
|---|---|
| (30) Priorität: **27.06.83 DE 3323475** **02.04.84 DE 3412659** | (73) Patentinhaber: **Hochstrasser geb. Wack, Elisabeth, Bismarckstrasse 57, D-6600 Saarbrücken (DE)** Patentinhaber: **Hochstrasser, Jürgen, Bismarckstrasse 57, D-6600 Saarbrücken (DE)** |
| (43) Veröffentlichungstag der Anmeldung: **16.01.85 Patentblatt 85/3** | (72) Erfinder: **Mathieu, Hans, In der Nachtweid 7, D-6601 Saarbrücken-Bischmisheim (DE)** Erfinder: **Hochstrasser, Jürgen, Kobenhüttenweg 20, 6600 Saarbrücken 3 (DE)** |
| (45) Bekanntmachung des Hinweises auf die Patenterteilung: **22.04.87 Patentblatt 87/17** | |
| (84) Benannte Vertragsstaaten: **AT CH FR GB LI** | (74) Vertreter: **Meinig, Karl-Heinz, Dipl.-Phys. et al, PATENTANWÄLTE PFENNING MEINIG & PARTNER Kurfürstendamm 170, D-1000 Berlin 15 (DE)** |
| (56) Entgegenhaltungen: **EP - A - 0 059 798** **DE - A - 1 709 316** **DE - A - 2 028 282** **BAUMASCHINE UND BAUTECHNIK, Band 21, Heft 3, März 1974, Seiten 73-82, Wiesbaden, DE; J. HORNUNG: "Lärmarme Bauverfahren auf innerstädtischen Tiefbaustellen - Möglichkeiten und Anwendungsbereiche"** | |

## Beschreibung

Die Erfindung bezieht sich auf eine wechselweise in entgegengesetzten Richtungen arbeitende Drehvorrichtung zur Erleichterung des Eintreibens oder Herausziehens von Vortreibrohren, Pfählen oder dergleichen.

Derartige Drehvorrichtungen sind, wie im Oberbegriff des Hauptanspruches angegeben, aus der DE-C-1709316 der Anmelder bekannt (vgl. auch DE-A-2028282). Die Übertragung der Schlagenergie erfolgt bei diesen bekannten Drehvorrichtungen durch den auswechselbar angeordneten Bolzen, der in einer entsprechenden nutenartigen Ausnehmung des einen Anschlages lösbar befestigt ist und in die ebenfalls entsprechende Ausnehmung des anderen Anschlages eintritt und hierbei die Schlagenergie überträgt, ohne dass sich die beiden gegenüberliegenden Flächen des Anschlagpaares unmittelbar berühren. Die Bolzen unterliegen einem hohen Verschleiss, und da die Bolzen leicht auswechselbar sind, lässt sich ein Verschleiss der Anschlagpaare selbst vermeiden, so dass auch bei längster Betriebszeit eine gleichmässige Übertragung der Schlagenergie von der Schwinge auf das Vortreibrohr gewährleistet ist.

Ein Nachteil dieser bekannten Drehvorrichtungen besteht darin, dass sie im Einsatz sehr starke Arbeitsgeräusche erzeugen, die vornehmlich in Abhängigkeit von der Bodenbeschaffenheit unterschiedlich gross sind. Die hauptsächlichste Geräuschquelle liegt natürlich in den die Schlagenergie der Schwinge auf das Vortreibrohr übertragenden bei jeder Teildrehung miteinander in Eingriff gelangenden Anschlagelementen, aber auch die in den Enden der Schwinge aufgenommenen austauschbaren Schwunggewichte bilden eine nicht unerhebliche Geräuschquelle, die ebenfalls bei jedem Schlagimpuls zwischen den Schwunggewichten einerseits und den diese aufnehmenden Halterungen der Schwinge andererseits zur Wirkung kommt. Bei einem pneumatischen Betrieb der Arbeitszylinder ergibt sich eine weitere Geräuschquelle durch die Freigabe der Druckluft aus den Zylindern ebenfalls bei jedem Schlagimpuls, und bei Verwendung eines zusätzlichen, im oberen Ende des Vortreibrohres angeordneten rohrförmigen Rammkörpers, der bei besonders schwierigen Bodenverhältnissen dem Vortreibrohr zusätzliche axiale Schlagimpulse erteilt, ergibt sich eine weitere Geräuschquelle. Das durch diese Geräuschquellen sich ergebende Arbeitsgeräusch liegt erheblich oberhalb des in Wohngebieten durch Verordnungen geregelten, zulässigen Geräuschpegels, so dass es bei Verwendung der Drehvorrichtung in solchen bewohnten Gebieten unumgänglich notwendig ist, kostenaufwendige und umständlich zu handhabende Schalldämpfeinrichtungen zur Anwendung zu bringen, beispielsweise Schallschluckkästen, Bohrrohrkapseln, Schalldämpfkragen oder ähnliche schalldämpfende Einrichtungen, damit die Arbeitsgeräusche der Drehvorrichtung innerhalb der vorgeschriebenen Grenzen gehalten werden.

Diese bei Verwendung der Drehvorrichtung in besiedelten Gebieten erforderlichen zusätzlichen Schalldämpfeinrichtungen stellen durch den mit ihnen verbundenen Aufwand einen nicht unerheblichen Nachteil dar, zumal bei unterschiedlichen Betriebsverhältnissen, das heisst bei unterschiedlichen Bodenverhältnissen, unterschiedlichen Temperaturbedingungen und sonstigen unterschiedlichen Umweldbedingungen unterschiedlich ausgebildete Schalldämpfvorrichtungen erforderlich sind, die beim Betrieb an verschiedenen geografischen Orten gegebenenfalls unterschiedliche Umrüstungen erforderlich machen.

Der Erfindung liegt die Aufgabe zugrunde, die Verwendung von zusätzlichen Schalldämpfungseinrichtungen weitgehend zu vermeiden und die Dreheinrichtung durch Anordnung und Ausbildung ihrer geräuscherzeugenden Bestandteile so auszubilden, dass das beim Betrieb entstehende Arbeitsgeräusch im Rahmen der jeweils zulässigen Lärmschutzvorschriften liegt, so dass die bisher erforderliche Anordnung zusätzlicher Geräuschdämpfeinrichtungen entfällt.

Diese Aufgabe wird bei einer Drehvorrichtung nach dem Oberbegriff des Hauptanspruches gelöst durch die in dem kennzeichnenden Teil angegebenen Merkmale. Die Unteransprüche stellen vorteilhafte Weiterbildungen der Erfindung nach dem Hauptanspruch dar.

Dadurch, dass das der Übertragung der Schlagenergie dienende, zwischen dem Anschlagpaar angeordnete Element aus einem inkompressiblen, elastischen Material besteht, das in wenigstens einem Anschlag des Anschlagpaares in einer Ausnehmung aufgenommen ist, die eine innerhalb der Elastizitätsgrenze des Elementes liegende Verformung, insbesondere quer zur Schlagrichtung zulässt, einen direkten Kontakt der Anschlagpaare verhindert, entsteht beim Kontakt des Elementes mit dem Anschlagpaar eine starke Schalldämpfung, da das Geräusch durch die innerhalb der Elastizitätsgrenze des Elementes gehaltene Verformung in starkem Masse gemindert wird. Ausserdem kommt die durch die elastische Verformung in dem Element gespeicherte Federkraft bei Beendigung der Teildrehung der Schwinge unverzüglich in entgegengesetzter Bewegungsrichtung zur Wirkung, so dass die Drehschwinge sofort in Gegenrichtung beschleunigt wird mit der Folge, dass eine höhere Schlagfrequenz erreicht wird. Für das Element kann an sich jedes inkompressible elastische Material Anwendung finden unter der Voraussetzung, dass die Elastizitätsgrenze des Materials den jeweils gegebenen Betriebsbedingungen angepasst ist, so können Elemente mit einer höheren oder niedrigen Elastizität in Abhängigkeit von dem Einsatzort und dem Grad der Beanspruchung verwendet und in das Anschlagpaar eingesetzt werden.

Bei Anordnung auswechselbarer Schwunggewichte sind zwischen diesen und den Armen der Schwinge unter Vorspannung gehaltene Elemente angeordnet, durch die das Entstehen eines Arbeitsgeräusches zuverlässig verhindert wird. Bei pneumatisch betätigbaren Antriebszylindern wird die aus diesen austretende Druckluft über schalldämpfende Kammern, die Teile der Schwinge bilden, abgeführt, wodurch eine ausreichende Geräuschdämpfung gewährleistet ist. Bei einem in dem Ende des Vortreibrohres angeordneten ringförmigen Rammkörper zur Erzielung zusätzlicher axialer Schläge auf das Vortreibrohr ist zwischen dem Rammkörper und dem Vortreibrohr ein ringförmiges geräuschdämpfendes im Rahmen seiner Elastizitätsgrenze verformbares Element angeordnet.

Voraussetzung für die durch die erfindungsgemässen Massnahmen erzielbare Geräuschdämpfung ist die Tatsache, dass die Schwinge und das Vortreibrohr unabhängig von den Umgebungsverhältnissen und der Neigung des Vortreibrohres stets konzentrisch zueinander geführt sind. Zu diesem Zwecke ist erfindungsgemäss zwischen dem Lagerkranz des Vortreibrohres und dem Innenflansch der Schwinge eine Kugeldreh-Verbindung mit axial und radial belastbaren konzentrischen Lagerringen angeordnet, wobei der äussere Lagerring an der Unterseite des Innenflansches der Schwinge und der innere Lagerring der Kugeldreh-Verbindung an einem Hilfsring befestigt ist, der seinerseits durch Schweissung mit dem Lagerkranz verbunden ist.

In jedem Anschlag des Innenflansches der Schwinge sind beiderseitige Ausnehmungen angeordnet, die mit den Elementen Umfangsspalte bilden, die eine bestimmbare innerhalb der Elastizitätsgrenzen des Elementes liegende Verformung quer zur Schlagrichtung zulassen. Bei einer Ausführungsform umfasst der Anschlag die in ihm angeordneten Elemente auf allen seinen Umfangsflächen unter Bildung eines Spaltes. Bei einer abgewandelten Ausführungsform besitzt der Anschlag in seiner Stirnfläche eine kreisbogenförmige, der Aufnahme des entsprechend ausgebildeten Fusses des Elementes dienende Ausnehmung, und die eine parallel zur Umfangsfläche des Innenflansches liegende Seitenfläche des Elementes liegt an dieser Oberfläche an, während die gegenüberliegende Seitenfläche des Elementes mit der Oberfläche des Lagerkranzes einen Spalt bildet; die beiden anderen einander gegenüberliegenden Seitenflächen des Elementes sind von einer unterseitigen mit dem Innenflansch verbundenen Stützplatte und einer oberseitigen, mit dem Innenflansch verschraubbaren Deckplatte unter Spaltbildung eingefasst, und es ist eine den Fuss des Elementes durchgreifende, in Lagerbohrungen der Stützplatte und der Abdeckplatte aufgenommene, der austauschbaren Befestigung des Elementes mit dem Innenflansch dienende Stange vorgesehen. Diese Ausführungsform macht erforderlichenfalls einen leichten Austausch eines für bestimmte Betriebsverhältnisse geeigneten Elementes gegen ein anderes für andere Betriebsverhältnisse geeignetes Element auf einfache Weise möglich und ermöglicht auch eine nachträgliche Ausstattung einer bekannten Drehvorrichtung mit dem erfindungsgemässen Element.

Eine weitere Ausführungsform, die eine einfache Auswechselbarkeit der Elemente gestattet, besteht in der Anordnung von Stützplatten und Deckplatten mit einem Wulst, der mit den Seitenflächen der Vorsprünge in Eingriff steht und damit eine Halterung der Elemente in der gewünschten Stellung bewirkt, ohne die Verformbarkeit der Elemente negativ zu beeinträchtigen.

Die Schwunggewichte sind vorteilhafterweise als zylindrische oder leicht konische, mit einem Tragflansch versehene Körper ausgebildet, die in entsprechende Hülsen an den Enden der Schwinge einsetzbar sind, und besitzen in Umfangsnuten angeordnete ringförmige Elemente, die beim Einsatz in die Hülsen unter Vorspannung gesetzt werden mit der Folge, dass eine Relativbewegung zwischen den Gewichten und den diese aufnehmenden Hülsen nicht möglich ist und eine innerhalb der Elastizitätsgrenzen des Elementes liegende Verformung gewährleistet ist.

Bei Verwendung pneumatisch betätigbarer Antriebszylinder ist diesen ein gemeinsamer, an der Schwinge angeordneter, durch an dem Lagerkranz befestigte Endanschläge betätigbarer Steuerschieber zugeordnet, der mit die wechselweise aus den Arbeitszylindern austretende Druckluft aufnehmenden Leitungen versehen ist, die in den einzelnen Arbeitszylindern zugeordnete, der Schalldämpfung dienende Expansionskammern der Schwinge münden. Vorteilhafterweise sind jedem Arbeitszylinder zwei miteinander durch ein einen Resonanzschalldämpfer oder Absorptionsschalldämpfer bildendes Überströmrohr verbundene Expansionskammern zugeordnet, wobei die zweite Kammer eine mit Dämpfungsmatten versehene Austrittsöffnung aufweist, die die austretende Luft den Elementen zuführende Leitorgane besitzt. Auf diese Weise ist gewährleistet, dass insbesondere in Arbeitsgebieten hoher Temperaturen von den Elementen, die in ihnen durch die Verformungsarbeit erzeugte Erwärmung abgeführt wird. Die Dämpfungsmatte selbst ist als leicht herausnehmbare Einsteckplatte ausgebildet, die in der jeweils gewünschten Anzahl in einen von perforierten Wänden gebildeten Hohlraum einsteckbar sind.

Bei Verwendung eines zusätzlichen, der Erzielung axialer Schläge dienenden Rammkörpers ist in dem nach aussen gerichteten Ringflansch des Rammkörpers ein in einer entsprechenden Nut aufgenommenes, der Geräuschdämpfung dienendes erfindungsgemässes Element angeordnet.

Die der weiteren Erläuterung und Kennzeichnung der Erfindung dienenden beiliegenden Zeichnungen zeigen eine beispielsweise Ausführungsform der Erfindung, und es bedeutet:

Fig. 1 eine Seitenansicht der Schwinge der Drehvorrichtung in teilweisem Schnitt;

Fig. 2 Aufsicht gemäss Fig. 1 bei in Mittelstellung gezeigter Schwinge, wobei die beiderseitigen Teildrehungen strichpunktiert dargestellt sind;

Fig. 3 Schnittdarstellung in vergrössertem Massstab einer Ausführungsform der Befestigung des Elementes;

Fig. 4 Aufsicht gemäss Fig. 3 im Schnitt;

Fig. 5 Seitenansicht einer Drehvorrichtung mit einem zusätzlichen, in axialer Richtung betätigbaren Rammkörper;

Fig. 6 Schnittdarstellung einer Einzelheit in vergrössertem Massstab einer weiteren Ausführungsform der Befestigung der Elemente, und

Fig. 7 Aufsicht gemäss Fig. 6 im Teilschnitt.

Die in den Zeichnungen dargestellte Drehvorrichtung besteht aus vier einzelnen Teilen, dem Vortreibrohr 1, der Drehschwinge 2, den Schwunggewichten 3, 3' und dem ringförmigen Rammkörper 4. Die Drehschwinge 2 besitzt zwei Arme, die an ihren Enden Hülsen 5 tragen, in die die Schwunggewichte 3 einsetzbar sind.

An der äusseren Umfangsfläche des Vortreibrohres 1 sind sechs Kupplungsklötze 6 befestigt, in die an der Innenfläche des Lagerkranzes 7 angeordnete Gegenklötze 8 eingesetzt werden können. Die Kupplungsklötze 6 und die Gegenklötze 8 halten den Lagerkranz 7 und damit die Schwinge 2 in axialer Richtung auf dem Vortreibrohr 1 und dienen der Übertragung der bei Betätigung des Rammkörpers 4 erzeugten axialen Impulse und auch der von der Schwinge 2 ausgeübten tangentialen Drehschläge.

Der Lagerkranz 7 besitzt zwei symmetrisch zur Nebenachse der Schwinge 2 einander gegenüberliegende Gelenklager 9, 9', an denen die Kolbenstangen 10, 10' von zwei Antriebszylindern 11, 11' angreifen, die in kardanischen Lagern 12, 12' drehbeweglich an der Unterseite der Schwinge 2 befestigt sind.

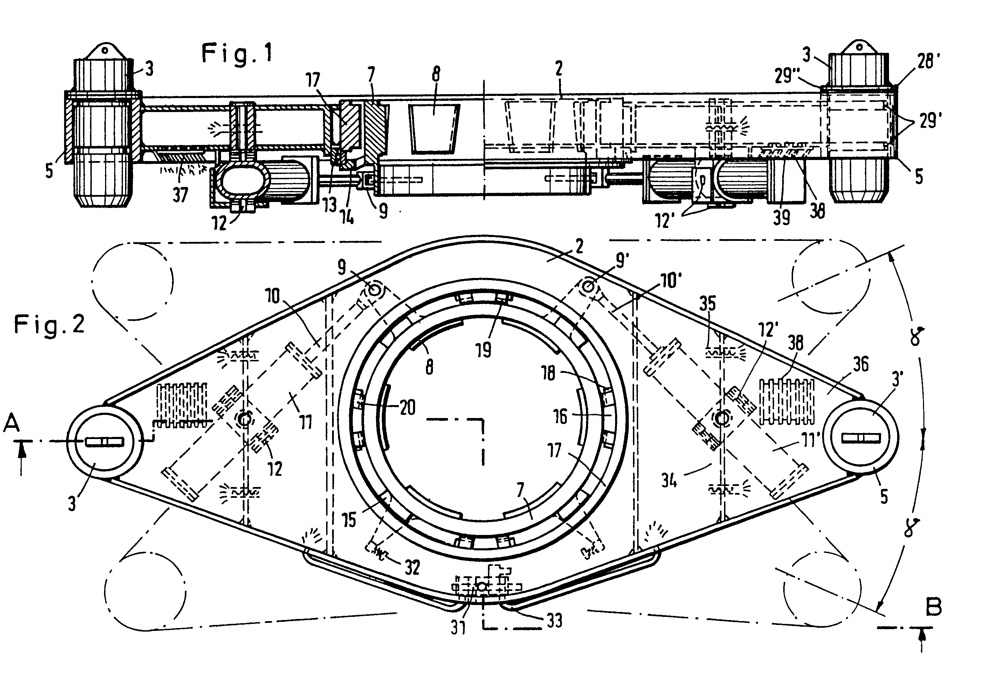

An der Unterseite der Schwinge 2 ist konzentrisch zum Lagerkranz 7 eine Kugeldreh-Verbindung 13 mit senkrechter Trennfuge angeordnet, deren Aussenring mit dem Lagerkranz verbunden ist und dessen äusserer Lagerring an der Unterseite des Innenflansches 17 der Schwinge 2 und dessen innerer Lagerring an einem Hilfsring 14 befestigt ist, der seinerseits mit dem Lagerkranz 7 durch Schweissung verbunden ist, wie Fig. 1 zeigt. Auf diese Weise ist die Schwinge 2 auf dem Lagerkranz 7 mit absoluter Präzision drehbar gelagert auch dann, wenn die Vortreibrohre 1 gegen die Senkrechte geneigt sind.

Der Lagerkranz 7 besitzt an seinem äusseren Umfang vier symmetrisch angeordnete vorspringende Anschlagnocken 15, 15', an denen die an den Vorsprüngen 16, 16' des Innenflansches 17, 17' der Schwinge 2 befestigten inkompressiblen, elastischen Elemente 18 bei Betätigung der Schwinge 2 wechselseitig zur Anlage kommen. Die Elemente 18, 18', 18'' können in Abhängigkeit von den jeweiligen Betriebsbedingungen aus an sich beliebigen Materialien, beispielsweise Kunststoff oder auch aus Metall bestehen.

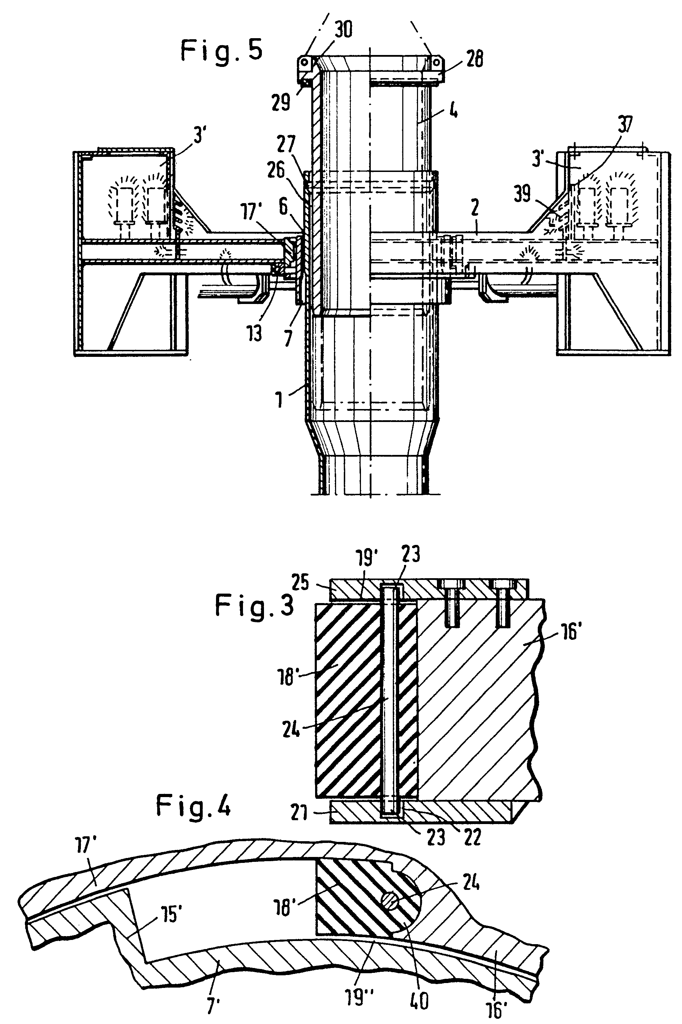

Wie die Fig. 2 zeigt, sind beiderseits der Vorsprünge 16 des Innenflansches 17 Vertiefungen 20 angeordnet, in denen unter Bildung eines Luftspaltes 19 die Elemente 18 aufgenommen sind. Infolge eines, beispielsweise durch die Grösse der Luftspalte 19 in Querdehnungsrichtung des, beispielsweise aus dem unter der Bezeichnung «Vulkollan» bekannten Kunststoff bestehenden Elementes 18 vorausbestimmbaren elastischen Verformungsweges erfolgt eine schallgedämpfte Übertragung der bei dem jeweiligen Anschlag des Elementes 18 der Schwinge 2 an den Anschlagnocken 15 des Lagerkranzes 7 wirkenden Schläge. Am Ende eines jeden tangentialen Schlages kommen bei voller Kraftwirkung die Elemente 18 in ihren Vertiefungen fest zur Anlage und zufolge der Inkompressibilität der Anschläge können auf diese Weise bei üblichen, im mitteleuropäischen Raum herrschenden Temperaturen grösste Drehschläge der Schwinge 2 auf das Vortreibrohr 1 übertragen werden. Infolge der Federwirkung der elastischen Elemente 18 wird die Schwinge 2 bei Beendigung der Teildrehung des Vortreibrohres 1 unverzüglich in entgegengesetzter Richtung beschleunigt, so dass die Antriebszylinder 11 mit ihrer Beschleunigung sofort mit einer Geschwindigkeit grösser als $v_o$ einsetzen, wobei sich eine höhere Schlagfrequenz ergibt. Die verhältnismässig geringe Verlustenergie in Form von Erwärmung der Elemente 18 wird mit Hilfe der Aussenluft oder der expandierenden Druckluft aus den Antriebszylindern 11, 11' in die Atmosphäre abgeleitet.

Um den Dämpfungsweg bei den Anschlägen der Schwinge 2 am Lagerkranz 7 zu verdoppeln, ist es möglich, am Lagerkranz 7 ebenfalls kautschukelastische Elemente 18 in entsprechenden Vertiefungen 20 vorzusehen, oder es können auch nur am Lagerkranz 7 die Elemente 18 und am Innenflansch 17 der Schwinge 2 Anschlagnocken aus Stahl vorgesehen sein.

Bei dem in den Fig. 3 und 4 gezeigten Ausführungsbeispiel ist das Element 18' in senkrecht zur Schwinge 2 gerichtete, kreisbogenförmige nutenartigen Ausnehmungen 40 eingesetzt, um insbesondere auch den Umbau vorhandener Drehvorrichtungen zu ermöglichen. An der Unterseite des Anschlages 16' ist ein Halter 21 angeschweisst, und an der Oberseite ist eine Stützplatte 25 durch Schrauben lösbar befestigt. Die Platten 21, 25 sind mit Lagerbohrungen 22 versehen, während das Element 18' eine Durchgangsbohrung besitzt, so dass es mittels einer Stange 24 auswechselbar mit dem Anschlag 16' verbindbar ist. Zur Festlegung der elastischen Verformbarkeit des Elementes 18' sind gemäss Fig. 3 Luftspalte 19' vorgesehen, während zwischen dem Element 18' und dem Lagerkranz 7' ein weiterer Spalt 19'' angeordnet ist, so dass das Element 18' bei seiner elastischen Verformung mit seiner einen Seitenfläche an der Wandung des Lagerkranzes 7' zur Anlage gelangt.

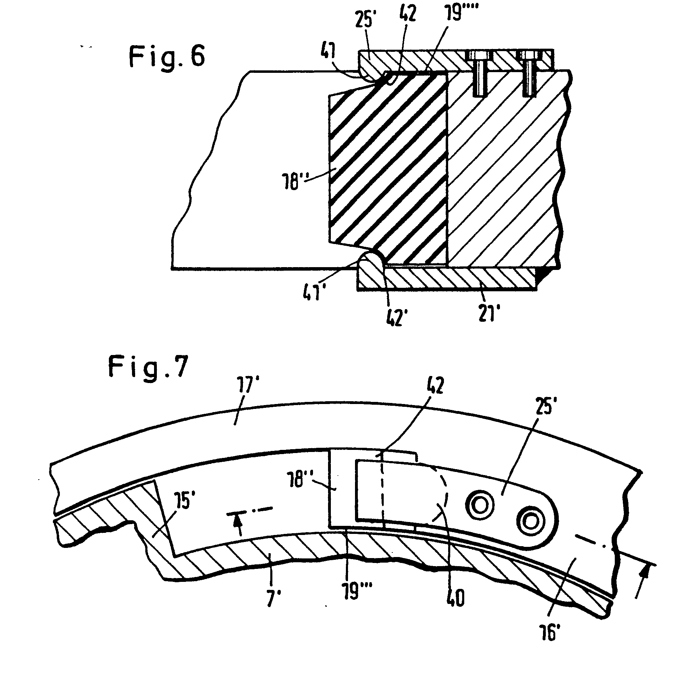

In den Fig. 6 und 7 ist ein Ausführungsbeispiel dargestellt, bei dem die Halterung der Elemente 18'' mit ihren Vorsprüngen 42, 42' in Stützplatten 21' und Deckplatten 25' mit Wülsten 41, 41' erfolgt.

Damit bei extrem hohen mechanischen Beanspruchungen und/oder im extremen Temperaturbereich ein und dieselben Geräte verwendet werden können, ist es lediglich erforderlich, die üblichen kautschukelastischen Elemente 18' durch gleiche Elemente beispielsweise aus Kupfer oder festem Kunststoff zu ersetzen.

Die Fig. 5 zeigt ein weiteres Ausführungsbeispiel, bei dem fest angeordnete Schwunggewichte 3' vorgesehen sind. Das Vortreibrohr 1 ist mit einem verstärkten Oberteil 26 versehen, das eine Innennut 27 zur Aufnahme eines nicht dargestellten Sprengringes besitzt, der zur Befestigung eines ebenfalls nicht dargstellten Verschlussdeckels für das Vortreibrohr 1 beim Rückzug mit Hilfe der Schwinge 2 und einer Kranzugkraft und gegebenenfalls auch mit Hilfe einer im Inneren des Vortreibrohres 1 wirkenden Druckluftkraft dient. Im Inneren des Oberteiles 26 ist ein ringförmiger Rammkörper 4 angeordnet, der axial nach Art einer Freifallramme mit einem Windenseil oder mit Hubzylindern angehoben und fallengelassen wird, wobei an dem Flansch 28 ein ringförmiges Dämpfungselement 29 in einer Vertiefung angeordnet ist, durch das die Energie des Rammkörpers 4 stoss- und schallgedämpft in das Oberteil 26 des Vortreibrohres 1 übertragen wird bei gleichzeitiger Betätigung der Schwinge 2.

Wie die Fig. 1 zeigt, sind die in die Hülsen 5 der Schwinge 2 einsteckbaren Schwunggewichte 3 mit kautschukelastischen ringförmigen Elementen 29' versehen; auch diese Elemente 29' werden bei Erreichung der Endstellungen der Schwinge 2 um ein durch eine entsprechende Nut vorausbestimmbares Mass elastisch verformt, wobei in extremen Belastungsfällen, das heisst bei minimaler Drehung des Vortreibrohres 1 aufgrund sehr hoher Erdreibung, ebenfalls die Inkompressibilität der Elemente 29' ausgenutzt wird. Zwischen dem Flansch 28' des Schwunggewichtes 3 und der oberen Stirnseite der Hülse 5 sind ebenfalls ringförmige kautschukelastische Elemente 29'' angeordnet. Die Schwunggewichte 3 werden mittels eines Kranes in die Hülsen 5 eingesetzt und verspannen sich infolge entsprechender Bemessung der Ringelemente 29' selbsttätig in den Hülsen 5. Die Schwunggewichte 3 können hinsichtlich ihrer Höhe und damit hinsichtlich ihres Gewichtes unterschiedlich sein zur Vergrösserung des Massenträgheitsmomentes der Schwinge 2 und zur Erhöhung des Bohrandruckes auf die nicht dargestellte Schneide des Vortreibrohres 1, so dass die Schwinge 2 mit unterschiedlichen Schwunggewichten 3 ausgestattet werden kann.

Bei einem pneumatischen Betrieb der Schwinge 2 sind gemäss Fig. 1 und 2 mit Druckluft betätigbare Antriebszylinder 11 und ein Steuerschieber 31 vorgesehen. Der Kolben des Steuerschiebers 31 stösst in den jeweiligen Endstellungen der Schwinge 2 an mit Dämpfungselementen versehene Endanschläge 32 an und wird umgesteuert, wobei die über den Steuerschieber 31 ausströmende Druckluft durch Leitungen 33 in der Schalldämpfung dienende Kammern 34 der Schwinge 2 geführt wird. Die Schwinge 2 besitzt mehrere Expansionskammern 34, 36. Die in die Kammer 34 eingeleitete Druckluft expandiert, strömt dann über als Resonanzschalldämpfer wirkende Überströmrohre 35 in die Kammer 36, expandiert erneut und strömt dann durch eine mit porösen Dämpfungsmatten 37 verschlossene Austrittsöffnung 38, die mit Leitblechen 39 zur Umlenkung der in die Atmosphäre eintretenden Druckluft ausgestattet ist, um diese auf die Elemente 18, 18', 18''

zum Zwecke der Kühlung zu lenken. Bei besonders hohem Druckluftanfall können im Innern der Kammern 34, 36 zusätzlich als Innenverkleidung Dämmstoffmatten 37 angeordnet sein.

**Patentansprüche**

1. Wechselweise in entgegengesetzten Richtungen arbeitende Drehvorrichtung zur Erleichterung des Eintreibens oder Herausziehens von Vortreibrohren, Pfählen oder dergleichen, mit einem am Vortreibrohr (1) oder dergleichen befestigten Lagerkranz und einer darauf um das Vortreibrohr (1) oder dergleichen drehbar gelagerten Schwinge (2), die zwei symmetrisch zur Rohrachse angeordnete, an ihren Enden mit je einem Schwunggewicht (3) versehene Arme aufweist, und mit mehreren am Lagerkranz (7) bzw. an einem Innenflansch (17) der Schwinge (2) angeordneten Anschlagpaaren und der Übertragung der Schlagenergie dienenden, einen direkten Kontakt der Anschlagpaare verhindernden Elementen (18, 18', 18''), sowie mit Antriebszylindern (11, 11'), deren Gehäuse und Kolbenstangen (10, 10') am Lagerkranz bzw. an der Schwinge (2) angelenkt sind, dadurch gekennzeichnet, dass das Element (18, 18', 18'') aus einem inkompressiblen, elastischen Material besteht, das in wenigstens einem Anschlag der Anschlagpaare (15, 16; 15', 16') in mit den Elementen (18, 18', 18'') Umfangsspalte (19, 19', 19'', 19''', 19'''') bildenden Ausnehmungen (20, 40) aufgenommen ist, die eine innerhalb der Elastizitätsgrenze des Elementes (18, 18', 18'') liegende Verformung, insbesondere quer zur Schlagrichtung zulassen.

2. Drehvorrichtung nach Anspruch 1, dadurch gekennzeichnet, dass bei Anordnung auswechselbarer Schwunggewichte (3) zwischen diesen und den Armen der Schwinge (2) unter Vorspannung gehaltene Elemente (29', 29'') angeordnet sind und dass die Schwunggewichte (3) aus massivem Metall oder als Gefässe für ganze oder teilweise Füllung mit Sand oder Schwermetall ausgebildet sind.

3. Drehvorrichtung nach Anspruch 1, dadurch gekennzeichnet, dass bei pneumatisch betätigbaren Antriebszylindern (11, 11') die aus diesen austretende Druckluft über Teile der Schwinge (2) bildende schalldämpfende Kammern (34, 36) abführbar ist.

4. Drehvorrichtung nach Anspruch 1, dadurch gekennzeichnet, dass bei einem in dem Ende des Vortreibrohres (1) angeordneten ringförmigen Rammkörper (4) zwischen diesem und dem Vortreibrohr (1) ein ringförmiges Element (29) angeordnet ist.

5. Drehvorrichtung nach Anspruch 1 bis 4, dadurch gekennzeichnet, dass zwischen dem Lagerkranz (7, 7') und dem Innenflansch (17, 17') der Schwinge (2) eine Kugeldreh-Verbindung (13) mit axial und radial belastbaren konzentrischen Lagerringen angeordnet ist.

6. Drehvorrichtung nach Anspruch 5, dadurch gekennzeichnet, dass der äussere Lagerring an der Unterseite des Innenflansches (17) der Schwinge (2) und der innere Lagerring der Kugeldreh-Verbindung (13) an einem Hilfsring (14) befestigt ist, der seinerseits beispielsweise durch Schweissung mit dem Lagerkranz (7) verbunden ist.

7. Drehvorrichtung nach Anspruch 1, dadurch gekennzeichnet, dass in jedem Anschlag (16, 16') des Innenflansches (17, 17') der Schwinge (2) beiderseitige Ausnehmungen (20, 40) angeordnet sind, die mit den Elementen (18, 18', 18") Umfangsspalte (19, 19', 19", 19''', 19'''') bilden.

8. Drehvorrichtung nach Anspruch 7, dadurch gekennzeichnet, dass der Anschlag (16) die in ihm angeordneten Elemente (18) auf allen seinen Umfangsflächen unter Bildung eines Spaltes (19) umfasst.

9. Drehvorrichtung nach Anspruch 7, dadurch gekennzeichnet, dass jeder Anschlag (16') in seiner Stirnfläche eine vorzugsweise kreisbogenförmige, der Aufnahme des entsprechend ausgebildeten Fusses des jeweiligen Elementes (18', 18") dienende Ausnehmung (40) aufweist, dass eine Seitenfläche des jeweiligen Elementes (18', 18") an der entsprechenden Stelle der Oberfläche des Innenflansches (17') der Schwinge (2) anliegt, dass die gegenüberliegende Seitenfläche des Elementes (18', 18") mit der Oberfläche des Lagerkranzes (7') einen Spalt (19", 19''') bildet, dass die beiden anderen einander gegenüberliegenden Seitenflächen des Elementes (18', 18") von einer unterseitigen, mit dem Innenflansch (17') vorzugsweise fest verbundenen Stützplatte (21, 21') und einer oberen, mit dem Innenflansch verschraubbaren Deckplatte (25, 25') unter Bildung von Spalten (19', 19'''') eingefasst sind.

10. Drehvorrichtung nach Anspruch 9, dadurch gekennzeichnet, dass eine den Fuss des jeweiligen Elementes (18') durchgreifende, in Lagerbohrungen (23) der Stützplatte (21) und der Abdeckplatte (25) aufgenommene, der austauschbaren Befestigung des Elementes (18') mit dem Innenflansch (17') dienende Stange (24) vorgesehen ist.

11. Drehvorrichtung nach Anspruch 9, dadurch gekennzeichnet, dass die jeweilige Stützplatte (21') und Deckplatte (25') mit Wülsten (41, 41') ausgebildet sind, welche mit den entsprechenden Seitenflächen (42, 42') der Elemente (18") in Eingriff stehen.

12. Drehvorrichtung nach Anspruch 2, dadurch gekennzeichnet, dass die Schwunggewichte (3) zylindrische oder leicht konische, mit einem Tragflansch (28') versehene, in entsprechende an den Enden der Schwinge (2) befestigte, Hülsen (5) einsteckbare Körper sind, und dass die Schwunggewichte (3) mit in Umfangsnuten angeordneten, beim Einsatz in die Hülsen (5) unter Vorspannung gesetzten, ringförmigen Elementen (29') ausgestattet sind.

13. Drehvorrichtung nach Anspruch 2, dadurch gekennzeichnet, dass an der Unterseite des Tragflansches (28') ein in eine ringförmige Nut eingesetztes Ringelement (29") angeordnet ist.

14. Drehvorrichtung nach Anspruch 3, dadurch gekennzeichnet, dass den Antriebszylindern (11, 11') ein gemeinsamer, an der Schwinge (2) angeordneter, durch an dem Lagerkranz (7, 7') befestigte Endanschläge (32) betätigbarer, den Ein- und Auslass der Druckluft regelnder Steuerschieber (31) zugeordnet ist, der mit die wechselweise aus den Arbeitszylindern (11, 11') austretende Druckluft aufnehmenden Leitungen (33) versehen ist, und dass die Leitungen (33) in den einzelnen Arbeitszylindern (11, 11') zugeordnete, der Schalldämpfung dienende Expansionskammern (34) der Schwinge (2) münden.

15. Drehvorrichtung nach Anspruch 14, dadurch gekennzeichnet, dass jedem Arbeitszylinder (11, 11') zwei miteinander durch ein einen Resonanzschalldämpfer und/oder Absorptionsschalldämpfer bildendes Überströmrohr (35) verbundene Expansionskammern (34, 36) zugeordnet sind, und dass die zweite Kammer (36) eine mit Dämpfungsmatten (37) versehene Austrittsöffnung (38) aufweist, die die austretende Luft den Elementen (18, 18', 18") zuführende Leitorgane (39) besitzt.

16. Drehvorrichtung nach Anspruch 13, dadurch gekennzeichnet, dass die Dämpfungsmatte (37) als leicht entfernbare Einsteckplatte ausgebildet ist, die in der jeweils gewünschten Anzahl in einen durch gegenüberliegende perforierte Wände gebildeten Hohlraum einsteckbar ist.

17. Drehvorrichtung nach Anspruch 4, dadurch gekennzeichnet, dass das Element (29) in einer an der Unterseite des am oberen Ende des Rammkörpers (4) befindlichen Ringflansches (28) angeordneten Nut aufgenommen ist.

**Claims**

1. A rotation device operating alternately in opposite directions to facilitate the driving an extraction of advance heading pipes, piles or similar, wherein a bearing ring is affixed on the advance heading pipe (1) or similar, a rocker (2) is pivotably fixed on the former about the advance heading pipe (1) or similar and exhibits two arms arranged symmetrical to the pipe axis, the extremity of each arm being provided with an inertia weight (3), wherein several pairs of dogs are arranged respectively on the bearing ring (7) and an inner flange (17) of the rocker (2) and members (18, 18', 18") serve to transmit the striking energy and prevent direct contact between the pairs of dogs, and having drive cylinders (11, 11') whose casing and piston rods (10, 10') are hinged respectively at the bearing ring and the rocker (2), characterised in that the member (18, 18', 18") consists of an incompressible, elastic material contained in at least one dog from the pairs of dogs (15, 16; 15', 16') in recesses (20, 40) which form peripheral clearances (19, 19', 19", 19''', 19'''') with the members (18, 18', 18"), said recesses permitting deformation within the elastic limit of the member (18, 18', 18") particularly at right angles to the striking direction.

2. The rotation device of claim 1, characterised in that in an arrangement of interchangeable inertia weights (3) prestressed members (29', 29") are disposed between the latter and the arms of the rocker (2) and that the inertia weights (3) are constructed of solid metal or as containers completely or partially filled with sand or heavy metal.

3. The rotation device of claim 1, characterised in that where the drive cylinders (11, 11') can be pneumatically operated the compressed air that emerges therefrom can be removed via noise-attenuating chambers (34, 36) forming parts of the rocker (2).

4. The rotation device of claim 1, characterised in that where an annular ram unit (4) is arranged in the end of the advance heading pipe (1) an annular member (29) is arranged between said ram unit and the advance heading pipe (1).

5. The rotation device of claims 1 to 4, characterised in that between the bearing ring (7, 7') and the inner flange (17, 17') of the rocker (2) is arranged a ball bearing slewing rim (13) with concentric bearin rings which have axial and radial load capacity.

6. The rotation device of claim 5, characterised in that the outer bearing ring is affixed on the lower side of the inner flange (17) of the rocker (2) and the inner bearing ring of the ball bearing slewing rim (13) is secured on an auxiliary ring (14) which in turn is joined to the bearing ring (7), for example by welding.

7. The rotation device of claim 1, characterised in that in each dog (16, 16') of the inner flange (17, 17') of the rocker (2) are arranged double-sided recesses (20, 40) which form peripheral clearances (19, 19', 19", 19''', 19'''') with the members (18, 18', 18").

8. The rotation device of claim 7, characterised in that the dog (16) encompasses the members (18) arranged in it on all its peripheral faces and thereby forms a clearance (19).

9. The rotation device of claim 7, characterised in that each dog (16') exhibits in its end face a preferably circular arcshaped recess (40) which receives the correspondingly designed base of the respective member (18', 18"), that one lateral face of the respective member (18', 18") abuts the corresponding point on the surface of the inner flange (17') of the rocker (2), that the opposing lateral face of the member (18', 18") forms a clearance (19", 19''') with the surface of the bearing ring (7), that the two other mutually opposed lateral faces of the member (18', 18") are framed from below by a bracket plate (21, 21') preferably rigidly attached to the inner flange (17') and from above by a top plate (25, 25') which can be screwed onto the inner flange, thereby forming clearances (19', 19'''').

10. The rotation device of claim 9, characterised in that a rod (24) is provided which penetrates the base of the respective member (18'), is accommodated in bearing bores (23) in the bracket plate (21) and cover plate (25), and serves to interchangeably attach the member (18') to the inner flange (17').

11. The rotation device of claim 9, characterised in that the respective bracket plate (21') and top plate (25') are constructed with beads (41, 41') which engage with the corresponding lateral faces (42, 42') of the members (18").

12. The rotation device of claim 2, characterised in that the inertia weights (3) are cylindrical or slightly conical units which are provided with a bearing flange (28') and can be inserted into corresponding sleeves (5) attached at the ends of the rocker (2), and in that the inertia weights (3) are equipped with annular members (29') arranged in peripheral grooves which are placed in pre-stressed state into the sleeves (5).

13. The rotation device of claim 2, characterised in that on the bottom side of the bearing flange (28') there is arranged an annular member (29") inserted in an annular groove.

14. The rotation device of claim 3, characterised in that the drive cylinders (11, 11') incorporate a common control spool valve (31) which is arranged on the rocker (2), can be actuated by limit dogs (32) affixed on the bearing ring (7, 7') and regulates the intake and exhaust of the compressed air, and which is provided with lines (33) receiving the compressed air emerging alternately from the working cylinders (11, 11'), and in that the lines (33) terminate in expansion chambers (34) in the rocker (2) which are incorporated in the individual working cylinders (11, 11') and serve to attentuate noise.

15. The rotation device of claim 14, characterised in that each working cylinder (11, 11') incorporates two expansion chambers (34, 36) connected together by an overflow pipe (35) which forms a resonance muffler and/or absorption muffler, and in that the second chamber (36) exhibits an outlet port (38) provided with muffling mats (37) which contains guide elements (39) supplying the emerging air to the members (18, 18', 18").

16. The rotation device of claim 13, characterised in that the muffling mat (37) is designed as a readily detachable face plate, any desired number of which can be inserted into a cavity formed by opposing perforated walls.

17. The rotation device of claim 4, characterised in that the member (29) is accommodated in a groove arranged in the bottom side of the circular flange (28) disposed at the top end of the ram unit (4).

**Revendications**

1. Système tournant fonctionnant alternativement en sens opposés pour faciliter l'enfoncement à force ou l'extraction d'un tube de poussée ou d'un pieu; ce système comportant une couronne de portage (7), fixée au tube de poussée (1) et sur laquelle est monté rotativement un palonnier (2), qui peut ainsi tourner autour du tube de poussée (1) et qui comporte deux bras disposés symétriquement par rapport à l'axe du tube de poussée (1), ces deux bras étant pourvus chacun à son extrémité d'une masse d'inertie (3); le palonnier (2) comportant également plusieurs paires d'organes de butée, disposés sur la couronne de portage (7) et sur une collerette intérieure (17) du palonnier (21), ainsi que des éléments (18, 18', 18") qui servent à transmettre l'énergie des chocs de frappe, en empêchant un contact direct des organes de butée de chaque paire, et des vérins d'actionnement (11, 11'), dont les corps cylindriques et les tiges de pistons (10, 10') sont articulés respectivement sur la couronne de portage (7) et sur le palonnier (2); le système étant caractérisé en ce que chaque élément (18, 18', 18") est constitué d'un matériau élastique incompressible, celui-ci étant logé dans des évidements (20, 40) prévus dans au moins l'un des organes de chaque paire d'organes de butée (15, 16; 15', 16'), de manière à ménager un interstice périphérique (19, 19', 19", 19''', 19'''') en regard des éléments (18, 18', 18"), afin de permettre une déformation de chacun des éléments (18, 18', 18") dans la limite d'élasticité de ces éléments, en particulier dans un sens transversal à celui de la frappe.

2. Système tournant selon la revendication 1, caractérisé en ce que le palonnier (2) peut être équipé de masses d'inertie interchangeables (3), des éléments (29', 29") maintenus sous précontrainte étant disposés entre les masses d'inertie (3) et les bras du palonnier (2); et en ce que les masses d'inertie (3) sont en métal massif, ou constituées par des récipients prévus pour être remplis en totalité ou en partie avec du sable ou avec un métal lourd.

3. Système tournant selon la revendication 1, caractérisé en ce qu'il comporte des vérins d'actionnement pneumatiques (11, 11'), et en ce que l'air sous pression qui s'échappe de ces vérins passe dans des chambres d'atténuation de bruit (34, 36) qui font partie du palonnier (2).

4. Système tournant selon la revendication 1, caractérisé en ce qu'il comporte une masse de battage de forme annulaire (4), disposée à l'extrémité du tube de poussée (1), et un élément annulaire (29) disposé entre la masse de battage (4) et le tube de poussée (1).

5. Système tournant selon l'une des revendications 1 à 4, caractérisé en ce qu'il comporte une couronne de liaison à billes (13), disposée entre la couronne de portage (7, 7') et la collerette intérieure (17, 17') du palonnier (2), cette couronne de liaison (13) étant pourvue d'anneaux de portage concentriques prévus pour encaisser des efforts axiaux et radiaux.

6. Système tournant selon la revendication 5, caractérisé en ce que l'anneau de portage extérieur est fixé sur le bord inférieur de la collerette intérieure (17) du palonnier (2), l'anneau de portage intérieur de la couronne de liaison à billes (13) étant fixé à un anneau auxiliaire (14), lui-même fixé à la couronne de portage (7), par exemple par soudage.

7. Système tournant selon la revendication 1, caractérisé en ce que des évidements (20, 40) sont ménagés dans chaque organe de butée (16, 16') de la collerette intérieure (17, 17') du palonnier, de part et d'autre de chaque organe, ces évidements formant des interstices périphériques (19, 19', 19''', 19'''') en regard des éléments (18, 18', 18").

8. Système tournant selon la revendication 7, caractérisé en ce que l'organe de butée (16) coiffe les éléments (18) montés sur cet organe, en les entourant sur toutes leurs faces périphériques, avec un interstice (19).

9. Système tournant selon la revendication 7, caractérisé en ce que chaque organe de butée (16') présente sur sa face frontale un évidement (40), de préférence profilé en arc de cercle, pour recevoir l'extrémité interne de l'élément correspondant (18', 18"); en ce que la face latérale de chaque élément (18', 18") se trouve en appui contre l'endroit correspondant de la surface de la collerette intérieure (17') du palonnier (2); en ce que la face latérale opposée de l'élément (18', 18") forme un interstice (19", 19''') avec la surface de la couronne de portage (7'); et en ce que les deux autres faces latérales opposées de l'élément (18', 18") sont encadrées par une plaque d'appui inférieure (21, 21'), reliée de préférence à demeure avec la collerette intérieure (17') et par une plaque de recouvrement supérieure (25, 25') fixée par des vis sur la collerette intérieure, un interstice (19', 19'''') étant ménagé entre chaque plaque et la face correspondante de l'élément (18', 18").

10. Système tournant selon la revendication 9, caractérisé en ce qu'il comporte, pour chaque élément (18') une tige de fixation (24), qui traverse l'extrémité interne de chaque élément et qui est retenue dans des trous borgnes (23) de la plaque d'appui (21) et de la plaque de recouvrement (25), pour fixer de manière interchangeable l'élément (18') sur la collerette intérieure (17').

11. Système tournant selon la revendication 9, caractérisé en ce que la plaque d'appui (21') et la plaque de recouvrement (25') comportent chacune un bourrelet de retenue (41, 41'), adapté à venir en prise avec une face latérale correspondante (42, 42') de l'élément (18") monté entre ces deux plaques.

12. Système tournant selon la revendication 2, caractérisé en ce que les masses d'inertie (3) sont constituées par des blocs cylindriques ou légèrement coniques, pourvus d'une collerette de soutien (28'), et adaptés à être enfilés dans des manchons correspondants (5), fixés aux extrémités du palonnier (2); et en ce que les masses d'inertie (3) sont munies d'éléments annulaires (29'), montés dans des gorges périphériques de ces masses et prévus pour travailler en compression au montage dans les manchons (5).

13. Système tournant selon la revendication 2, caractérisé en ce qu'il comporte un élément annulaire (29") monté dans une gorge de forme annulaire de la face inférieure de la collerette de soutien (28').

14. Système tournant selon la revendication 3, caractérisé en ce qu'il comporte un tiroir de commande (31), commun aux deux vérins d'actionnement (11, 11') et monté sur le palonnier (2), ce tiroir étant adapté à être manœuvré par des butées de fin de course (32) fixées à la couronne de portage (7, 7') pour assurer l'entrée et l'échappement de l'air comprimé; ce tiroir de commande (31) étant associé à des canalisations (33) prévues pour le passage de l'air sous pression qui s'échappe alternativement des vérins d'actionnement (11, 11'), et ces canalisations (33) débouchant dans des chambres d'expansion (34) du palonnier (2), respectivement associées à chaque vérin d'actionnement et destinées à atténuer le bruit.

15. Système tournant selon la revendication 14, caractérisé en ce qu'à chaque vérin de manœuvre (11, 11') sont associées deux chambres d'expansion (34, 36) reliées l'une à l'autre par un tube d'échappement (35) qui constitue un amortisseur de bruit à résonance et/ou un amortisseur de bruit à absorption; et en ce que la deuxième chambre (36) comporte un orifice de sortie (38) pourvu d'un matelas d'amortissement (37) et muni d'organes de déflexion (39) pour guider l'air qui s'échappe et le faire passer sur les éléments (18, 18', 18").

16. Système tournant selon la revendication 13, caractérisé en ce que le matelas d'amortissement (37) est constitué par des plaques emboîtées faciles à démonter, adaptées à se monter en nombre voulu dans une cavité ménagée entre deux parois perforées opposées.

17. Système tournant selon la revendication 4, caractérisé en ce que l'élément (29) est monté dans une gorge prévue dans la face inférieure de la collerette de soutien (28) située à l'extrémité supérieure de la masse de battage (4).

Fig. 1

Fig. 2

0131539

Fig.5

Fig.3

Fig.4

13

Fig. 6

25'  42  19'''''

41

19''

41'

42'  21'

Fig. 7

17'  42  25'

18''

15'

7'  19''''  40

16'